# EUROPÄISCHE PATENTSCHRIFT

(11) **EP 1 382 495 B1**
(45) Veröffentlichungstag und Bekanntmachung des Hinweises auf die Patenterteilung: **14.09.2005**
(21) Anmeldenummer: 02016053.7
(22) Anmeldetag: 19.07.2002
(51) Int. Cl.: B60R 21/01

(54) **Elektromagnetischer Aktor**
Electromagnetic actuator
Actionneur électromagnétique

(43) Veröffentlichungstag der Anmeldung: 21.01.2004
(73) Patentinhaber: THOMAS MAGNETE GmbH, 57562 Herdorf (DE)
(72) Erfinder: Kirsch, Bernhard, Dr., 66399 Mandelbachtal (DE); Overkott, Horst Walter, 57586 Weitefeld (DE)
(74) Vertreter: Grosse, Wolf-Dietrich Rüdiger

(56) Entgegenhaltungen:
- WO-A-01/44019
- US-A1- 2002 073 868
- O'CONNOR L: "INFLATING AIRBAGS WITH ELECTROMAGNETS" MECHANICAL ENGINEERING, ASME. NEW YORK, US, Bd. 117, Nr. 3, 1. März 1995 (1995-03-01), Seite 32 XP000504686 ISSN: 0025-6501

## Beschreibung

Die Erfindung betrifft einen elektromagnetischen Aktor mit einer Spule sowie in dieser beweglichem Anker zum Auslösen von Sicherheitssystemen in Kraftfahrzeugen, wobei der Aktor von einem Steuergerät ansteuerbar und im Auslösefall weitestgehend vom Bordnetz des Kraftfahrzeuges unabhängig ist.

Sicherheitssysteme in Kraftfahrzeugen, wie Airbags, werden üblicherweise von pyrotechnischen Aktoren ausgelöst. Airbags werden durch heiße Gase, die durch das Abbrennen eines Treibgases entstehen, aufgeblasen. Der Treibsatz wird durch ein pyrotechnisches Element aktiviert, welches wiederum von einem Steuergerät angesteuert wird. Dem Steuergerät sind Sensoren vorgeordnet, die Beschleunigungen, Erschütterungen, Überschläge oder dergleichen erkennen und entsprechende Signale ans Steuergerät geben, in welchem diese analysiert werden. In Abhängigkeit der Analyse werden ggf. die entsprechenden pyrotechnischen Elemente und damit die Sicherheitssysteme aktiviert. Neben den erwähnten Airbags lassen sich auch Gurtstraffer, Kopfstützenverriegelungen, Überrollschutzbügel, Absperrventile für Kraftstoffleitungen und elektrische Leitungen oder Aktoren zur Ent- und Verriegelung mechanischer Gelenke durch die entsprechenden Steuergeräte aktivieren.

Dabei wurden neben den pyrotechnischen Aktoren auch schon elektromagnetische Aktoren vor allem bei Überrollschutzsystemen eingesetzt. Neben den vorhandenen Steuergeräten mit pyrotechnischer Schnittstelle z.B. für Airbags, mussten eigens entwickelte Steuergeräte für elektromagnetische Aktoren entwickelt und eingebaut werden.

Die Verwendung von Steuergeräten mit pyrotechnischer Schnittstelle für elektromagnetische Aktoren war nicht möglich, da die an der pyrotechnischen Schnittstelle zur Verfügung stehende Energiemenge nicht ausreicht, um elektromagnetische Aktoren zu betätigen. Hinzu kommt, dass oft durch Einspeisen einer unterkritischen Leistung aus dem Steuergerät in den pyrotechnischen Aktor Aussagen über dessen Funktionsfähigkeit gewonnen werden können. Elektromagnetische Aktoren reagieren auf diese Diagnoseverfahren mit abweichendem Verhalten. Eine Diagnose, ob die elektromagnetischen Aktoren betriebsbereit sind, lässt sich damit regelmäßig nicht durchführen. Die Schrift WO-A-01/44019 wird als nächstliegender Stand der Technik betrachtet.

Der Erfindung liegt die Aufgabe zugrunde, einen elektromagnetischen Aktor zu entwickeln, der auch von einem Steuergerät mit pyrotechnischer Schnittstelle aktivierbar ist, wobei der elektromagnetische Aktor trotz geringer an der pyrotechnischen Schnittstelle zur Verfügung stehender Leistung sicher schaltet, und eine Diagnose bezüglich der Funktionsfähigkeit des elektromagnetischen Aktors gegeben ist und wobei der elektromagnetische Aktor einfach, kostengünstig und platzsparend aufgebaut ist.

Diese Aufgabe wird durch die Merkmale des Anspruchs 1 gelöst. Dadurch, dass dem Aktor ein Energiespeicher zugeordnet ist, kann dem elektromagnetischen Aktor ausreichend Leistung für ein sicheres Schalten zur Verfügung gestellt werden. Dadurch, dass der DC-DC-Wandler hier als Drossel-Aufwärtswandler eingesetzt wird und die Spule des elektromagnetischen Aktors als Drossel des DC-DC-Wandlers verwendet wird, lässt sich eine Spule einsparen und der besondere Vorteil liegt darin, dass die Spule des Aktors, wenn sie als Drossel des DC-DC-Wandlers arbeitet, ständig während dessen Arbeit auf ihre Funktion hin überprüft wird, d. h. eine entsprechende Diagnose stattfindet.

Von Vorteil ist, wenn der Drossel-Aufwärtswandler die Merkmale des Anspruchs 2 aufweist. Durch das RC-Glied kann die Frequenz und/oder das Tastverhältnis des Oszillators so eingestellt werden, dass der Ladestrom durch die Drossel den Aktor gerade nicht auszulösen vermag. Dabei sollte die Einstellung der Frequenz und/oder des Tastverhältnisses so gewählt werden, dass sicher auszuschließen ist, dass der Aktor durch den Drossel-Aufwärtswandler aktiviert wird, dass der Energiespeicher jedoch auch möglichst schnell aufgeladen werden kann.

Besonders vorteilhaft ist, dass der elektromagnetische Aktor und der DC-DC-Wandler eine bauliche Einheit bilden. Dadurch ist gewährleistet, dass diese Einheit nur einen sehr kleinen Bauraum benötigt. Gleichzeitig ist die elektromagnetische Störemission minimiert, aber auch die Aufnahme von Störsignalen ist durch den Wegfall von Verkabelungen zwischen dem Aktor und dem DC-DC-Wandler minimiert, so dass sich eine höhere Zuverlässigkeit der baulichen Einheit ergibt. Die Ladefrequenz des Drossel-Wandlers ist gegenüber bekannten Wandlern stark erniedrigt. Dadurch entstehen geringere elektrische Verluste, wodurch auch die Belastung des Bordnetzes verringert wird.

Es ist zweckmäßig, den Energiespeicher so zu wählen, dass seine Energie den Aktor auszulösen vermag, ohne dass es einer Energie aus dem Bordnetz bedarf. Es besteht nämlich durchaus die Möglichkeit, dass im Falle eines Unfalles das Bordnetz durch einen weiteren Aktor vom Akkumulator getrennt wird, so dass die Aktoren für die weiteren Sicherheitssysteme des Kraftfahrzeuges nur von dem, dem jeweiligen Aktor zugeordneten Energiespeicher aktiviert werden können, so dass die Aktoren energieautark arbeiten.

Es hat sich bewährt, dass der Energiespeicher auf ein Mehrfaches der Spannung des Bordnetzes aufladbar ist. Die hohe Spannung des Energiespeichers, z. B. eines Kondensators, ermöglicht eine Übererregung der Spule des Aktors, ohne unnötige ohmsche Energieverluste. Daraus resultiert eine verkürzte Schaltzeit des Aktors. Das Sicherheitssystem spricht entsprechend schneller an.

Ist dem Energiespeicher eine Überwachungsschaltung zugeordnet, so kann der Ladezustand des Energiespeichers jederzeit überprüft werden. Durch die Ladeschaltung wird zudem eine Alterung des Energiespeichers kompensiert. Da die Spule des Aktors mit zur Ladeschaltung gehört, wird gleichzeitig auch die Spule des Aktors überwacht.

Ist der Überwachungsschaltung ein Signalgeber zugeordnet, so kann ein Defekt im Aktor bzw. in der Ladeschaltung akustisch oder optisch sichtbar gemacht werden.

Nachahmenswert ist, wenn die Dimensionierung der Spule bzw. der Drossel so ausgelegt ist, dass der elektromagnetische Aktor auch bei Anlage der Bordspannung und konstanter Bestromung zu schalten vermag. Damit ergibt sich eine erhöhte Sicherheit für den elektromagnetischen Aktor und damit für das gesamte Sicherheitssystem.

Die Merkmale des Anspruchs 9 gewährleisten, dass, sobald das Steuergerät über seine pyrotechnische Schnittstelle ein Signal abgibt, der Aktor betätigt wird. Das gemeinsame Schaltelement für den Ausgang des Steuergerätes und den Ausgang des Oszillators gewährleistet, dass auch dieses ständig mit überwacht wird.

Bedeutsam ist, dass das Schaltelement durch das Steuergerät gegenüber dem Oszillator vorrangig schaltbar ist. Von dem Steuergerät wird ein, gegenüber dem Oszillatorsignal, längerer Impuls auf das Schaltelement gegeben, so dass der Aktor unverzüglich schaltet.

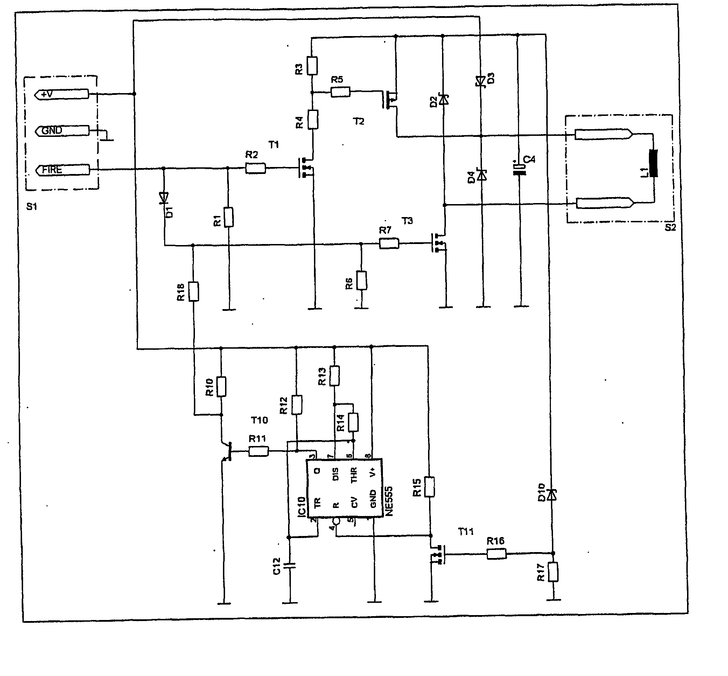

Die Erfindung wird anhand einer Zeichnung näher erläutert. Die Zeichnung zeigt die Spule L1 eines elektromagnetischen Aktors, die auch gleichzeitig die Drossel L1 eines Drossel-Aufwärtswandlers darstellt. Der Drossel-Aufwärtswandler weist einen als Oszillator arbeitenden integrierten Schaltkreis IC10 auf, dem ein RC-Glied, bestehend aus den Widerständen R13 und R14 sowie dem Kondensator C12 zugeordnet ist. Über dieses RC-Glied lässt sich die Ausgangsfrequenz und/oder das Tastverhältnis des Oszillators IC10 bestimmen. Am Ausgang 3 des Oszillators IC10 liegt ein Signal mit entsprechender Frequenz und entsprechendem Tastverhältnis an. Dieses Signal wird über den Widerstand R11 und den Transistor T10 sowie die Widerstände R18 und R7 auf den Transistor T3 gegeben.

Schließt der Transistor T3, so wird vom Bordnetz (+V) über die Diode D3 die Drossel L1 bestromt. Dabei darf der Transistor T3 nur so lange geöffnet sein, dass sich zwar in der Drossel L1 ein Magnetfeld aufbaut, dieses jedoch noch nicht stark genug ist, um den der Spule L1 zugeordneten Anker des Aktors anzuziehen. Wird der Transistor T3 geschlossen, so bricht das Magnetfeld in der Drossel L1 zusammen. Die Drossel wirkt dadurch als Spannungsquelle, die über die Diode D2 den als Energiespeicher wirkenden Kondensator C4 auflädt.

Der Anschluss mit der Bezeichnung "Fire" des Steckers S1 ist mit der pyrotechnischen Schnittstelle eines Steuergerätes verbunden. Wird über den Anschluss "Fire" ein Signal abgegeben, so wird der Transistor T3 über die Diode D1 und den Widerstand R7 geöffnet. Gleichzeitig öffnet der über den Widerstand R2 angesteuerte Transistor T2, welcher wiederum über die Widerstände R4 und R5 den Transistor T2 aufsteuert.

Nunmehr ergibt sich ein Stromkreis vom Kondensator C4 über den Transistor T2 zur Spule L1 und von dieser über den Transistor T3 wieder zum Kondensator C4. Der Kondensator C4 wird entladen und die Spule L1 baut ein Magnetfeld auf, welches stark genug ist, den Anker anzuziehen, so dass der Aktor schaltet und damit ein dem Aktor zugeordnetes Sicherheitssystem aktiviert. Dadurch, dass die pyrotechnische Schnittstelle über eine Diode D1, der Oszillator jedoch über einen Widerstand R18 auf den Transistor T3 geschaltet ist, ergibt sich ein Vorrang der pyrotechnischen Schnittstelle.

Übersteigt im Ladezyklus die Spannung am Kondensator C4 eine durch die Diode D10 und den Widerstand R 17 vorgegebene Spannung, so öffnet der Transistor T11, welche den Oszillator IC10 abschaltet. Fällt dagegen die Spannung am Kondensator C4 unter einen bestimmten Wert, so schließt der Transistor T11 wieder und der Oszillator IC10 arbeitet wieder.

Sollte der Kondensator C4 nicht aufgeladen sein, und am Eingang "Fire" ein Signal anstehen, so wird, wie oben beschrieben, unter anderem der Transistor T3 geöffnet. Vom Bordnetz +V kann die Spule L1 über die Diode D3 und den Transistor T3 mit der Bordspannung versorgt werden. Die Spule L1 ist so ausgelegt, dass sie auch bei Bordspannung ein Magnetfeld aufbaut, welches so stark ist, dass der Anker in der Spule L1 anzieht und damit das dem Aktor zugeordnete Sicherheitssystem schaltet.

## Patentansprüche

1. Elektromagnetischer Aktor mit einer Spule (L1) sowie in dieser beweglichem Anker zum Auslösen von Sicherheitssystemen in Kraftfahrzeugen, wobei der Aktor von einem Steuergerät ansteuerbar und im Auslösungsfalle weitestgehend vom Bordnetz (+V) des Kraftfahrzeuges unabhängig ist,
**dadurch gekennzeichnet,**
**dass** die Spule (L1) des elektromagnetischen Aktors die Drossel (L1) eines DC-DC-Wandlers bildet und dass der Drossel (L1) ein Energiespeicher (C4) zugeordnet ist.

2. Elektromagnetischer Aktor nach Anspruch 1,
**dadurch gekennzeichnet,**
**dass** der DC-DC-Wandler einen Oszillator (IC10) aufweist, das dem Oszillator (IC10) mindestens ein RC-Glied (R13, R14, C12) zugeordnet ist und
**dass** das Ausgangssignal des Oszillators (IC10) über das RC-Glied (R13, R14, C12) in seiner Frequenz und/ oder in seinem Tastverhältnis einstellbar ist.

3. Elektromagnetischer Aktor nach Anspruch 1 oder 2,
**dadurch gekennzeichnet,**
**dass** der elektromagnetische Aktor und der DC-DC-Wandler eine bauliche Einheit bilden.

4. Elektromagnetischer Aktor nach einem der Ansprüche 1 bis 3,
**dadurch gekennzeichnet,**
**dass** die Energie des Energiespeichers (C4) den Aktor auszulösen vermag.

5. Elektromagnetischer Aktor nach einem der Ansprüche 1 bis 4,
**dadurch gekennzeichnet,**
**dass** der Energiespeicher (C4) auf ein Mehrfaches der Spannung des Bordnetzes (+V) aufladbar ist.

6. Elektromagnetischer Aktor nach einem der Ansprüche 1 bis 5,
**dadurch gekennzeichnet,**
**dass** dem Energiespeicher (C4) eine Überwachungsschaltung (R16, R17, D10, T11) zugeordnet ist, und dass der Oszillator (IC10) bei Überschreitung einer vorgegebenen Spannung am Energiespeicher (C4) abschaltbar und bei Unterschreitung einer vorgegebenen Spannung am Energiespeicher (C4) einschaltbar ist.

7. Elektromagnetischer Aktor nach Anspruch 6,
**dadurch gekennzeichnet,**
**dass** der Überwachungsschaltung (R16, R17, D10, T11) ein Signalgeber zugeordnet ist, der zur Diagnose des Aktors heranziehbar ist.

8. Elektromagnetischer Aktor nach einem der Ansprüche 1 bis 3,
**dadurch gekennzeichnet,**
**dass** der elektromagnetische Aktor bei Anlage der Bordspannung und konstanter Bestromung zu schalten vermag.

9. Elektromagnetischer Aktor nach einem der Ansprüche 1 bis 8,
**dadurch gekennzeichnet,**
**dass** der Oszillator (IC10) und die pyrotechnische Schnittstelle des Steuergerätes mit dem Steuereingang eines der Drossel/Spule (L1) vorgeordneten Schaltelements (T3) verbunden ist.

10. Elektromagnetischer Aktor nach Anspruch 9,
**dadurch gekennzeichnet,**
**dass** das Schaltelement (T3) durch das Steuergerät vorrangig schaltbar ist.

## Claims

1. An electromagnetic actuator for triggering safety systems in motor vehicles, comprising a coil (L1) and an armature that is movably arranged therein, wherein the actuator is controlled by a control device and can be triggered, in essence, independently of the power supply (+V) of the motor vehicle,
**characterized in**
**that** the coil (L1) of the electromagnetic actuator forms the choke (L1) of a DC-DC converter, and in that an energy storage component (C4) is assigned to the choke (L1).

2. The electromagnetic actuator according to claim 1,
**characterized in**
**that** the DC-DC converter contains an oscillator (IC10), in that at least one RC-module (R13, R14, C12) is assigned to the oscillator (IC10), and
in that the output signal of the oscillator (IC10) can be adjusted with respect to its frequency and/or its pulse-duty factor by means of the RC-module (R13, R14, C12).

3. The electromagnetic actuator according to claim 1 or 2,
**characterized in**
**that** the electromagnetic actuator and the DC-DC converter form one structural unit.

4. The electromagnetic actuator according to one of claims 1-3,
**characterized in**
**that** the energy of the energy storage component (C4) suffices for triggering the actuator.

5. The electromagnetic actuator according to one of claims 1-4,
**characterized in**
**that** the energy storage component (C4) can be charged to a multiple of the voltage of the power supply (+V).

6. The electromagnetic actuator according to one of claims 1-5,
**characterized in**
**that** a monitoring circuit (R16, R17, D10, T11) is assigned to the energy storage component (C4), and in that the oscillator (IC10) can be switched off if a predetermined voltage of the energy storage component (C4) is exceeded and switched on if the voltage of the energy storage component (C4) falls short of a predetermined voltage.

7. The electromagnetic actuator according to claim 6,
**characterized in**
**that** a signal transmitter assigned to the monitoring circuit (R16, R17, D10, T11) can be used for diagnosing the actuator.

8. The electromagnetic actuator according to one of claims 1-3,
**characterized in**
**that** the electromagnetic actuator is able to switch if it is connected to the power supply and a constant current feed.

9. The electromagnetic actuator according to one of claims 1-8,
**characterized in**
**that** the oscillator (IC10) and the pyrotechnic interface of the control device are connected to the control input of a switching element (T3) arranged upstream of the choke/coil (L1).

10. The electromagnetic actuator according to claim 9,
**characterized in**
**that** the control device is able to switch the switching element (T3) in an overriding fashion.

## Revendications

1. Acteur électromagnétique, avec une bobine (L1), ainsi qu'avec une ancre mobile dans cette demière, pour déclencher des systèmes de sécurité dans des véhicules automobiles, l'acteur pouvant être activé par un appareil de commande et étant largement indépendant du réseau de bord (+V) du véhicule automobile, en cas de déclenchement,
**caractérisé en ce que** la bobine (L1) de l'acteur électromagnétique forme la bobine de choc (L1) d'un transformateur DC-DC et **en ce qu'**un accumulateur d'énergie (C4) est associé à la bobine de choc (L1).

2. Acteur électromagnétique selon la revendication 1,
**caractérisé en ce que** le transformateur DC-DC comporte un oscillateur (IC10), **en ce qu'**au moins un organe RC (R13, R14, C12) est associé à l'oscillateur (IC10) et **en ce que** le signal de sortie de l'oscillateur (IC10) est réglable dans sa fréquence et/ou dans son taux d'impulsions, par l'intermédiaire de l'organe RC (R13, R14, C12).

3. Acteur électromagnétique selon la revendication 1 ou 2,
**caractérisé en ce que** l'acteur électromagnétique et le transformateur DC-DC forment une unité constructive.

4. Acteur électromagnétique selon l'une quelconque des revendications 1 à 3,
**caractérisé en ce que** l'accumulateur d'énergie (C4) est en mesure de déclencher l'acteur.

5. Acteur électromagnétique selon l'une quelconque des revendications 1 à 4,
**caractérisé en ce que** l'accumulateur d'énergie (C4) peut être chargé à un multiple de la tension du réseau de bord (+V).

6. Acteur électromagnétique selon l'une quelconque des revendications 1 à 5,
**caractérisé en ce qu'**un circuit de surveillance (R16, R17, D10, T11) est associé à l'accumulateur d'énergie et **en ce que** l'oscillateur (IC10) peut être déconnecté sur l'accumulateur d'énergie (C4) en cas de dépassement d'une tension prédéfinie et qu'il peut être connecté sur l'accumulateur d'énergie (C4), en cas de non atteinte d'une tension prédéfinie.

7. Acteur électromagnétique selon la revendication 6,
**caractérisé en ce qu'**un transmetteur de signaux, qui peut être impliqué pour procéder au diagnostic de l'acteur est associé au circuit de surveillance (R16, R17, D10, T11).

8. Acteur électromagnétique selon l'une quelconque des revendications 1 à 3,
**caractérisé en ce que** lorsque la tension de bord est appliquée et l'alimentation électrique est constante, l'acteur électromagnétique est en mesure de commuter.

9. Acteur électromagnétique selon l'une quelconque des revendications 1 à 8,
**caractérisé en ce que** l'oscillateur (IC10) et l'interface pyrotechnique de l'appareil de commande sont reliés à l'entrée de commande d'un élément de commutation (T3) monté en amont de la bobine de choc / bobine (L1).

10. Acteur électromagnétique selon la revendication 9,
**caractérisé en ce que** l'élément de commutation (T3) est prioritairement commutable par l'appareil de commande.
